# EUROPEAN PATENT SPECIFICATION

(11) **EP 0 575 949 B1**
(45) Date of publication and mention of the grant of the patent: **08.01.1997**
(21) Application number: 93109906.3
(22) Date of filing: 22.06.1993
(51) Int. Cl.: G03B 42/04

(54) **Magazine for a stack of film sheets**
Magazin für einen Stapel Filmblätter
Magasin pour une pile de feuilles photographiques

(30) Priority: 22.06.1992 US 902215
(43) Date of publication of application: 29.12.1993
(73) Proprietor: EASTMAN KODAK COMPANY, Rochester, New York 14650-2201 (US)
(72) Inventor: DiPietro, Matthew, Rochester, New York 14650-2201 (US); Kausch, Thomas James, Rochester, New York 14650-2201 (US); Dethier, Vincent Bernard, Rochester, New York 14650-2201 (US)
(74) Representative: Blickle, K. Werner, Dipl.-Ing.

(56) References cited:
- EP-A- 0 233 541
- EP-A- 0 524 383
- US-A- 4 933 696
- US-A- 4 992 815

## Description

The present invention relates to an improved magazine of the kind used for receiving a stack of film sheets enclosed in a flexible bag or package, and wherein the package is removed from the sheets to enable feeding seriatim of the sheets from the magazine.

Typically, the package containing film is placed in a magazine having a spindle, and the leader of the package is attached to the spindle. Various methods have been suggested in the prior art for securing the leader to the spindle, including the threading of the leader through a slot in the spindle, the use of "Velcro", trademark; DE-Reg. No. 1162 855, at the end of the leader, the providing of holes in the leader to receive a hook provided on the spindle, and the use of gears for grabbing of the leader. These methods of attaching the leader to the spindle suffer from numerous drawbacks. One of these drawbacks is that they apply a pulling force to the leader prior to the leader being fully secured or wrapped about the spindle. This causes an uneven force to be applied across the leader which can result in tearing of the leader from the pouch or twisting of the package within the magazine which can make it difficult to pull the package from the stack or cause the package to jam within the magazine. Magazines of the type generally described above, are disclosed, for example, in US-A-4,725,011; US-A-4,909,389; US-A-4,933, 696; US-A-4,555,213; US-A-4,531,878; US-A-4,537,307; US-A-4,571,140; US-A-4,135,800; US-A-4,809,313; US-A-4,727,391; US-A-4,876,706; US-A-3,934,735; Italian Patent No. 1,062,043, EP-0 524 383 A2 and US-A-4 992 815.

According to the prior art, there exists a problem in providing a magazine which allows the leader to be wrapped securely about the spindle prior to the application of any substantial pulling force on the leader and thereby improve the reliability of the magazine in pulling the package from the stack of sheets.

The object is attained in accordance with the features of claim 1.

The foregoing problems are solved by providing a supply magazine for use in an apparatus for removing individual sheets of film that have been placed within a light-tight pouch having a leader secured to the leading edge. The magazine has a base which receives and retains a stack of sheet film within the light-tight pouch, and a cover secured to the base which can be rotated between a closed position and an open position. A take-up spindle is rotatably secured within the base for winding of the pouch thereon. The improvement comprises providing means for allowing the leader to be firmly wrapped about the spindle prior to the application of any substantial force to the package for pulling the package from the stack of sheets.

In the Preferred Embodiment presented below, reference is made to the accompanying drawings, in which:
Figure 1 is a perspective view of a magazine made in accordance with the present invention in the closed position;
Figure 2 is a cross-sectional view of the magazine of Figure 1 taken along line 2-2 illustrating the magazine in the open position;
Figure 3 is a top plan view of the magazine of Figure 1 illustrating in phantom lines a package having a stack of sheets enclosed therein;
Figure 4 is a perspective view of the take-up spindle used for removing the package from the stack of sheets;
Figure 5 is an enlarged partial cross sectional view of a portion of the magazine of the present invention in the open position as outlined by line 5-5 of Figure 2 illustrating the slacker lever assembly;
Figure 6 is a view similar to Figure 5 illustrating the slacker lever assembly when the magazine is in the closed position;
Figure 7 is an cross sectional view of the magazine in the closed position as taken along line 7-7 of Figure 3 illustrating the slacker lever assembly;
Figure 8 is an enlarged partial cross sectional view of the magazine of the present invention illustrating the clamp pad assembly as taken along line 8-8 of Figure 3; and
Figure 9 is an enlarged partial elevational view of the spindle as taken along line 9-9 of Figure 4 and the associated clamp pad when the cover is in the closed position.

In accordance with the present invention, a reusable, interchangeable film magazine is adapted to receive and hold a package containing a stack of film sheets enclosed within a light-tight flexible pouch, and to remove the package so that the sheets can be removed seriatim from the magazine and exposed, processed, and so forth Before proceeding with a description of the magazine of the present invention, a package suitable for use with the magazine will be described briefly.

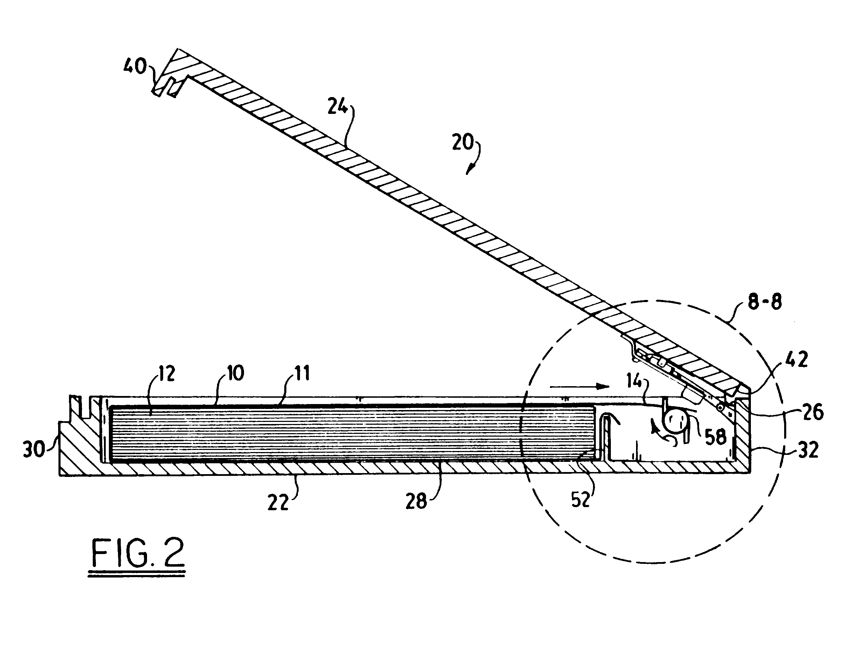

Referring to Figures 2, 3 and 5, a package, generally designated by reference numeral 10, comprises a light-tight pouch 11 designed to hold a stack of film sheets 12 therein. The package 10 further includes a leader 14 secured to the leading edge of the pouch 11. Film sheets 12 may comprise, for example, sheets of x-ray film. Sheets 12 in a particular package 10 preferably are all the same size, however, similar film pouches 10 can contain film sheets 12 of various sizes. The pouch 11 can be formed from a flexible barrier wrap material which is placed around the stack of film sheets 12. The material forming the pouch is typically heat-sealed as required to form a light-tight package around the film sheets 12. In the particular embodiment illustrated the pouch comprises laminated layers of a polyolefin material including a black modified high density polyethylene layer, and a metallized polyester or metallized oriented polypropylene layer with the black layer comprising the inner surface of the pouch 11. The pouch 11 can, of course, be made of any other suitable material.

The leader 14 is made of a material having sufficient strength to enable the pouch to be pulled off the stack of sheets 12 yet flexible enough to provide the degree of flexibility necessary for proper engagement with the spindle as later described. In the particular embodiment illustrated the leader 14 is made of a polyolefin material, such as rubber modified high density polyethylene and has a thickness of 0.011 cms (.0045 inches) and is heat sealed to pouch 11.

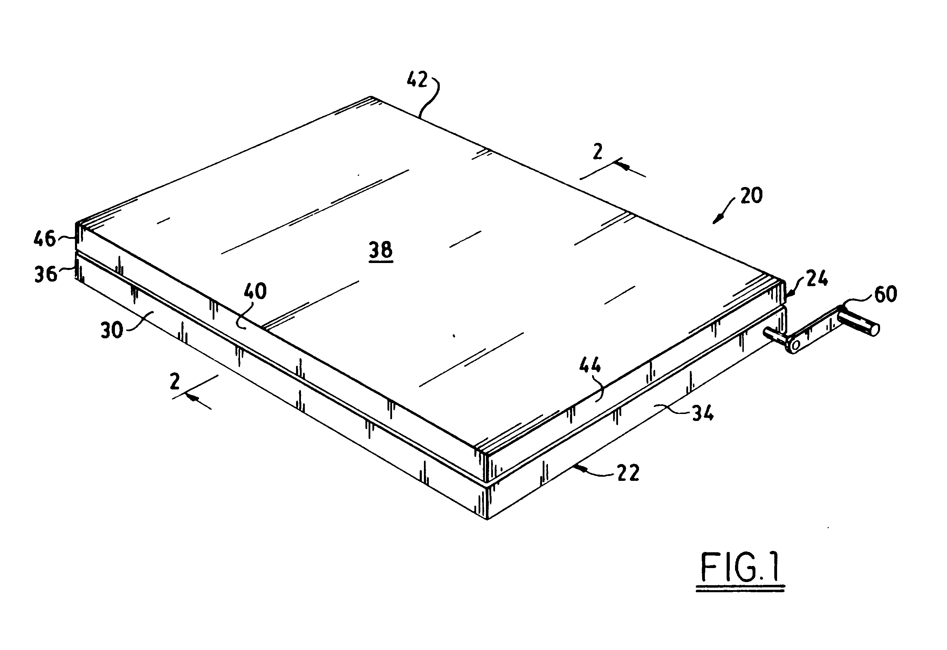

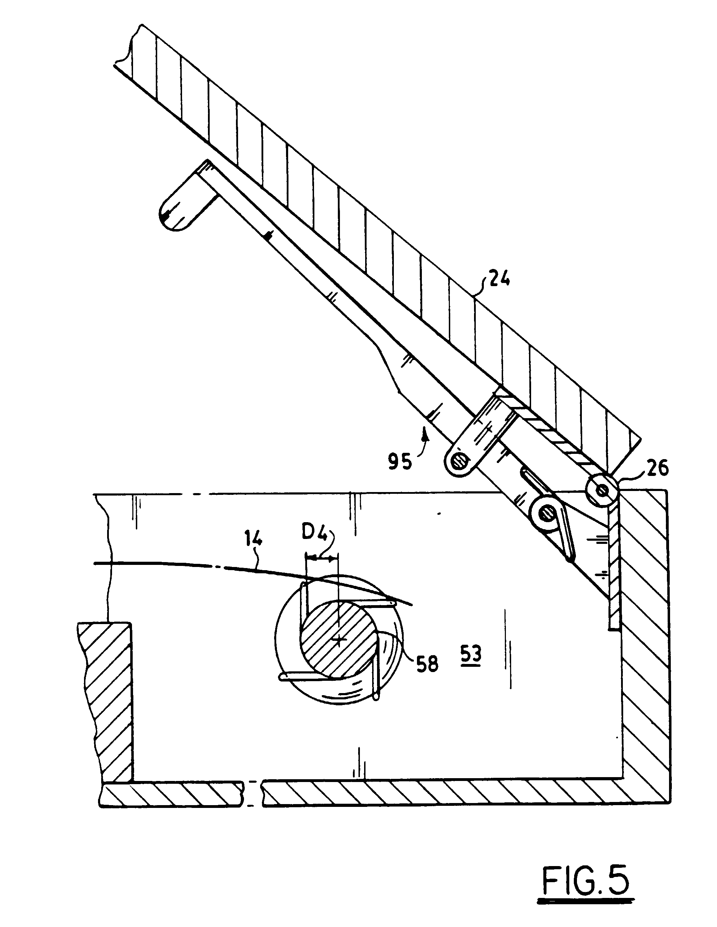

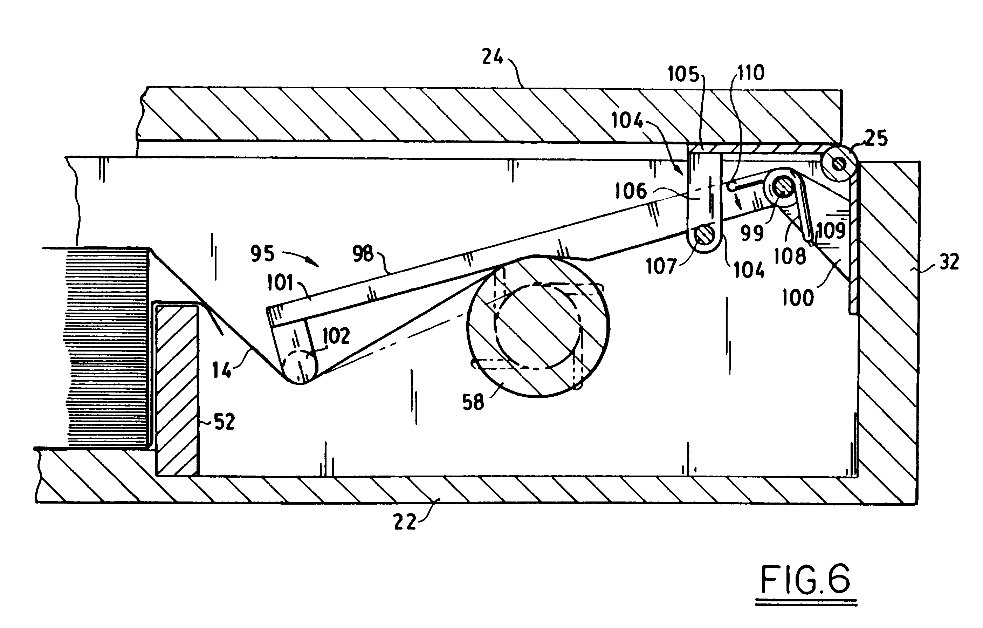

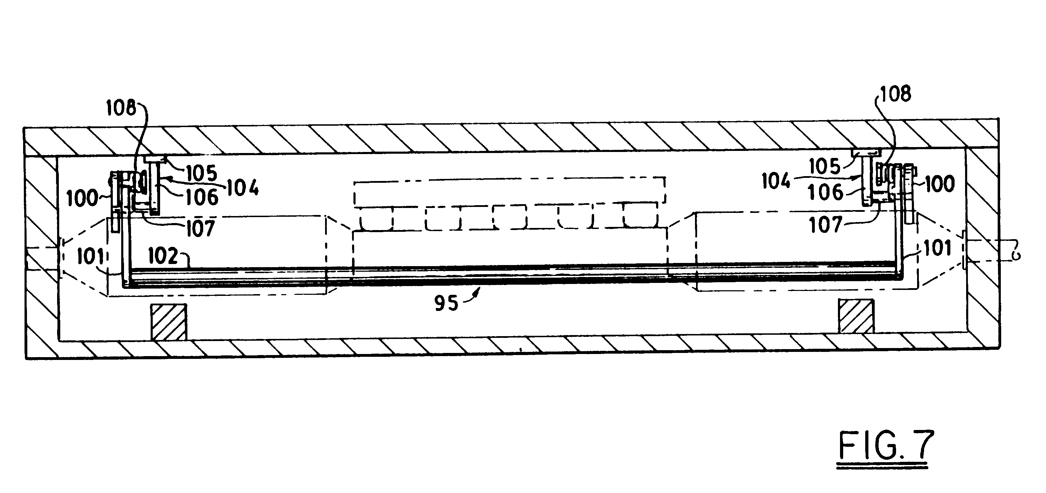

Referring now to Figures 1-9, a magazine 20 of the present invention is illustrated, and preferably comprises a base 22 and a cover 24 which is secured to the base 22 by hinges 26 along one side for moving the cover 24 between a closed position, as illustrated by Figures 1 and 6, and an open position as illustrated by Figures 2 and 5. The base 22 comprises a generally flat bottom 28 surrounded by a front wall 30, a rear wall 32, and a pair of side walls 34,36, all of which project upwardly above the inner surface of the bottom 28. Similarly, the cover 24 comprises a top 38 which is surrounded by a front wall 40, a rear wall 42, and a pair of side walls 44,46 which project downwardly from the top 38. The front wall, rear wall, and side walls of the cover and base contact corresponding walls of the other portion and of the magazine, and jointly define with the bottom and top a space within the magazine for receiving pouch 11. The magazine 20 is provided with means (not shown) for maintaining the cover 24 in an open position as illustrated in Figures 2 and 5. The providing of such mechanisms is well known in the art, and does not form a part of the present invention. It being understood that any means available may be incorporated in the magazine for maintaining the cover in the open position. Likewise, an appropriate latching mechanism may be provided for maintaining the cover 12 in the closed position on base 22.

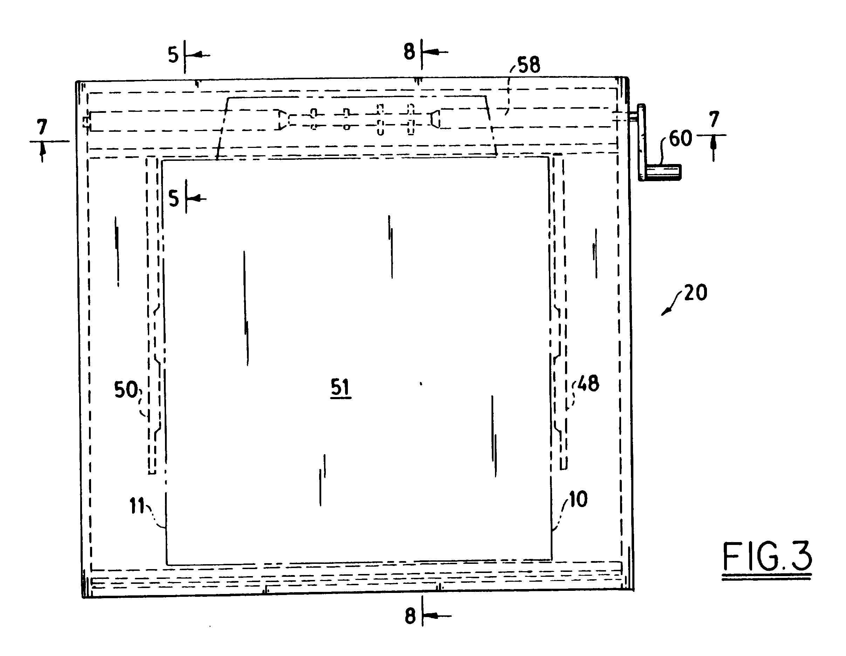

In the particular embodiment illustrated, a pair of locator bars 48,50, as shown by dash lines in Figure 3, are provided inside the magazine for accurately positioning the pouch 11 laterally within the magazine 20. Bars 48,50 preferably are mounted on the bottom 28 of the base 22 of the magazine 20 so that when the cover 24 is moved to its open position, the pouch 11 can be conveniently positioned in the base 22 of the magazine. Bars 48,50 are parallel to each other and side walls 34,36. Preferably the locator bars 48,50 are adjustable to a plurality of positions so that packages containing film of various sizes can be accurately located within the magazine. This can be accomplished, for example, by providing pins on the bottom of the locator bars 48,50, and a series of holes in the bottom 28 of the magazine 20 for receiving the pins and holding of locator bars 48,50 in position.

A bar stop 52 is secured to the bottom 28 of base 22 and is parallel to the front and rear walls 30,32. The bars 48,50, front wall 30 and bar stop 52 form a retention area 51 for receiving a stack of sheet film 12 placed within the pouch 11. As previously discussed, the locator bars 48,50 are preferably adjustable to accommodate various size stacks of sheets of film. The bar stop 52, rear wall 32, and side walls 34,36 form a pouch retention area 53 for receiving the package 10 as it is pulled off of the stack of sheets 12.

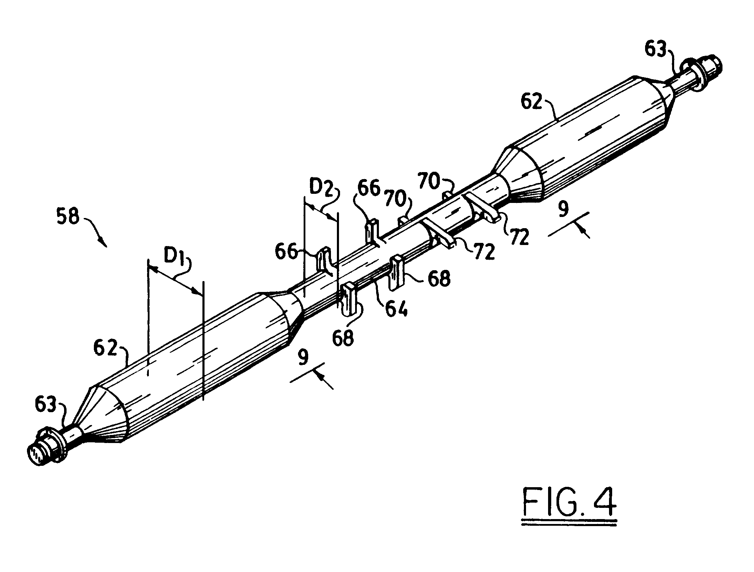

A take-up spindle 58 is rotatably secured to the base portion 22 in the pouch retention area 53. The spindle 58 can be rotated, for example, by a crank or handle 60 to wind the leader 14 about the spindle 58. Alternatively, the spindle 58 can be rotated by a motor connected to the spindle directly, or indirectly. The take-up spindle 58 is provided with means for automatically engaging the leader 14 of the pouch that has been properly placed within the magazine 10. It is to be understood that any desired means may be employed to engage the leader. In the particular embodiment illustrated, as seen in Figures 3 and 4, the take-up spindle 58 comprises a pair of outer cylindrical support sections 62 and a cylindrical gripping section 64 located between the outer support sections 62. The lateral ends 63 of outer support sections are rotatably mounted to the side walls 34,36 in a manner as is well known to those skilled in the art. The gripping section 64 is preferably located along the spindle 58 such that it is positioned substantially centrally with respect to the middle of the leader 14 of a package placed in magazine 20. The spindle in gripping section 64 has a diameter D2 which is preferably smaller than the diameter D1 of spindle in outer support sections 62. In the particular embodiment illustrated, D1 is 1.91 cms (.750 inches) and D2 is .95 cms (.375 inches).

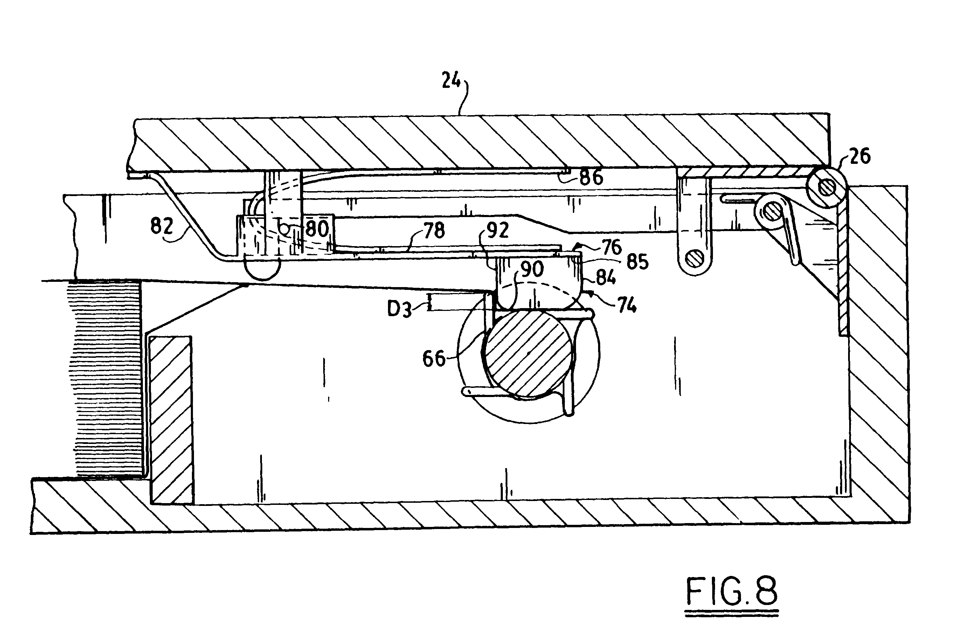

Means are provided for engaging the leader 14 in a manner such that the pouch 11 can be pulled off of the stack of sheets 12. In the particular embodiment illustrated, this is accomplished by the use of hook means provided on the spindle 58 which cooperates with biasing means which biases the leader against the hook means. A detailed description of the engaging means and its operation is more fully discussed in commonly owned co-pending application 93109838.8, EP-A-0 575 924 entitled "Magazine For a Stack of Film Sheets", which was filed concurrently with this application, and is hereby incorporated by reference. As best seen by reference to Figures 4,8 and 9, hook means comprises a first pair of axially aligned hooks 66, and a second pair of axially aligned hooks 68. The second pair of hooks 68 is circumferentially spaced approximately 180° about the spindle from the first pair of hooks 66 and is circumferentially aligned with respect to the first pair of hooks 66 such that when the spindle 58 is rotated, the first and second pair of hooks 66,68 pass through the same circumferential plane perpendicular to the axis of rotation of the spindle 58 as is best illustrated by reference to Figures 4 and 8.

In the particular embodiment illustrated, a third and fourth pair of hooks 70,72, respectively, are also provided in the central gripping section 64. The third and fourth pair of hooks 70,72 are spaced circumferentially about the spindle 58 in the same manner as the first and second pair of hooks 66,68. That is, the third and fourth pair of hooks 70,72 are spaced approximately 180° apart from each other, and are aligned circumferentially such that they rotate in the same plane perpendicular to the axis of rotation of the spindle 58. The third and fourth pair of hooks 70,72 are preferably spaced axially apart from the first and second pair of hooks 66,68, such that all the hooks are located substantially in the central area of the leader 14 that is to be placed thereon.

The hooks 66,68,70, and 72 each have a configuration designed to securely engage the leader yet allow the package 10 to be easily removed as is more fully described in the co-pending application previously discussed.

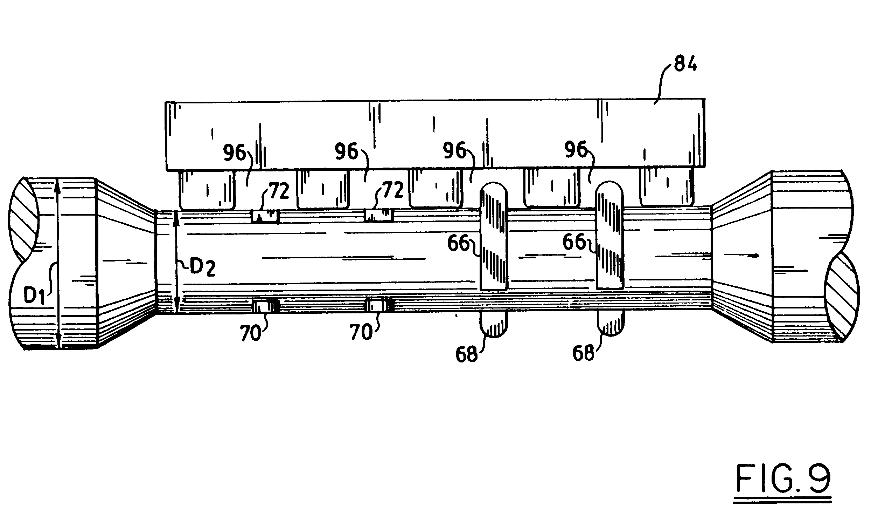

In the preferred embodiment illustrated, (see Figures 8 and 9) biasing means are provided for biasing the leader against the spindle. In the particular embodiment illustrated this takes the form of a hold-down lever assembly 74 which is secured to the cover 24. The hold-down lever assembly 74 includes a lever arm 76 which is pivotally mounted to the cover 24 about pivot 80. The lever includes a forward portion 78 disposed on one side of the pivot 80, and a rear extension 82 which extends on the other side of the pivot 80. The rear extension 82 limits the motion of the lever arm 76 when the cover 24 is in the open position as shown Figure 5. A clamp pad 84 is secured at the terminal end 85 of forward portion 78. A leaf spring 86 is provided in the forward portion 78 for biasing the clamp pad 84 against the take-up spindle 58 when the cover 24 is in the closed position. In the particular embodiment illustrated, the leaf spring 86 has a substantially U shaped configuration and is wrapped about pivot 80. The spring 86 is selected so as to provide a predetermined amount of force against the spindle 58 such that the hooks 66,68,70,72 will properly engage the leader 14, but not too great that it will add any significant resistance to the winding of the package 10 about the spindle 58. The clamp pad 84 includes a bottom engaging surface 90 and forward engaging surface 92. The bottom engaging surface 90 is designed to press directly against the take-up spindle 58 adjacent the hooks as best seen by reference to Figures 8 and 9. The forward engaging surface 92 is configured such that a resistive wall section is formed in the leader 14 as the spindle 58 is rotated. When a pouch is initially placed within the magazine 20, the operator positions the leader such that the leader extends toward the rear wall 32 of the magazine and lies on top of the take-up spindle 48. When the cover 24 is placed in the closed position, the hold-down lever assembly 74 will clamp the leader 14 between the clamp pad 84 and take-up spindle 58 as illustrated in Figure 6. The clamp pad 84 is provided with a plurality of recesses 96 which are positioned such that they allow corresponding hooks 66,68,70,72 to pass through the resistive wall formed in the leader 14 as the spindle 58 is rotated (see Figures 8 and 9).

Means are provided for allowing the leader 14 of package 10 to be firmly wrapped about the spindle prior to applying any substantial force on the leader 14 for pulling the pouch from the stack of film. In the particular embodiment illustrated, as best seen by reference to Figures 5, 6, 7 and 8, this takes the form of a slacker lever assembly 95 which includes a pair of spaced lever arms 98 each being rotatably mounted about a pivot 99. The pivots 99 are each respectively secured to the rear wall 32 by a bracket 100. At the distal end 101 of each of lever arms 98 there is provided a projecting engagement portion 102 which extends between and connects the lever arms 98. The size, shape and location of lever arms 98 are such that the engagement portion 102 will apply a downward force against the portion of the leader 14 located between the spindle 58 and bar stop 52 prior to applying a pulling force to leader 14 such that slack is provided in the leader 14 in this area. Slacker lever assembly 95 further includes retraction means for moving lever arms 98 out of the way when the cover 24 is in the open position so that the package 10 can be easily placed or removed from the base 22. In the particular embodiment illustrated retraction means takes the form of a pair of retraction members 104, one associated with each of the lever arms 98. The retraction members 104 each comprises a base 105 secured to cover 24, a central portion 106 which extends from the base 105 toward the base 22, and a catch member 107 disposed at the terminal end of central portion 104 and extends in a direction generally parallel to spindle 58. The retraction members 104 are secured to cover 24 and have a configuration such that the catch member 107 is located directly below its associated lever arm 98. A coil spring 108 having a pair of ends 109,110 is disposed about each pivot 99 such that one end 109 of each of the springs 108 bears against its associated bracket 100 and the other end 110 bears against its associated lever arm 98 so as to bias the lever arms 98 toward the base 22. When the cover 24 is in the closed position, as illustrated in Figure 6, the springs 108 biases the engagement section 102 against the adjacent leader 14 so as to provide slack in the leader 14. When the cover 24 is in the open position as shown in Figure 5, the retraction member 104 pulls the lever arm 98 away from the base 22 so as to provide easy access to the package placed therein.

In order to more clearly understand the present invention, use of the magazine will be discussed in detail. The cover 24 is first placed in the open position as illustrated in Figures 2 and 5. Thereafter, a package 10 containing a stack of sheets 12 is placed therein in such a manner that the leader 14 extends toward the rear wall 32 of the base 22. The pouch 11 containing the sheets 12 is place in retention area 51. The leader 14 is simply placed on top of the spindle 58 in the pouch retention area 53 below the lever assembly 74. Then the operator closes the cover 24 on the base this causes the slacker lever assembly 95 to engage the leader 14 so as to provide slack in the leader 14 in this area. Additionally once the cover 24 is positioned in the closed position, the hold-down lever assembly 74 engages the leader 14 in such a manner so as to clamp the leader 14 between the clamp pad 84 and take-up spindle 58. Thereafter, the take-up spindle 58 is rotated so as to cause the hooks to rotate in the direction indicated by arrow 98. This results in at least one of the pairs of hooks engaging the leader 14 in a firm and secure manner so that the pouch 11 can be wound upon the take-up spindle 58. However, since slack has been provided in the leader 14 no substantial amount of pulling force will be applied to the pouch 11 until the slack provided in the leader 14 has been taken up by wrapping the leader 14 about the spindle 58. Preferably, the amount of slack provided in the leader 14 by the lever assembly 95 is such that the leader 14 is wrapped about the spindle 58 approximately one turn as illustrated in Figure 8. This allows the leader 14 to cinch about the spindle 58 across substantially along the width of the leader 14. Thus, a pulling force will be applied substantially uniformly across the width W of the leader 14 (see Figure 3).

In the particular embodiment illustrated slacker lever assembly 95 has been provided with a pair of lever arms 98 located substantially centrally of the leader 14. However, the present invention is not so limited. For example, the slacker lever assembly may be provided with only a single lever arm 98 positioned off to one side of the center of the leader and having the engagement section extending over the central area of the leader.

The present invention provides a magazine which minimizes the possibility of tearing the leader from the pouch and or causing a jam within the magazine.

## Claims

1. A supply magazine (20) for use in an apparatus for removing individual sheet film (12), the sheet film being arranged in a stack and placed within a light-tight pouch (11), the pouch (11) having a leader (14) secured to the leading edge, said supply magazine (20) having
a base (22) having a receiving section (51) for holding and retaining the stack of sheet film placed within the light-tight pouch (11),
a cover (24) secured to said base by hinges (26) along one side for moving said cover (24) between a closed position and an open position on said base (22),
a take up spindle (58) rotatably secured within said base (22) for winding of the pouch (11) thereon, said spindle (58) having means for engaging the leader (14) and pulling the pouch (11) at least partially off the stack of sheet film;
a bar stop (52) disposed in said base (22) for retaining said stack of sheet film in said receiving section (51) during the removal of said pouch (11) from said stack of sheet film; said supply magazine (20) being characterized by:
means for providing slack in said leader, comprising at least one lever arm (98), an engagement portion (102) connected to said lever arm (98), and at least one spring (108), said lever arm (98) being rotatable relative to said base (22) and being biased by said spring (108) toward said base, said engagement portion (102) being disposed to apply a downward force against said leader (14) between said spindle (58) and said bar stop (52).

2. A supply magazine (20) as claimed in claim 1, further characterized in that said means for providing slack in said leader comprises a pair of spaced apart lever arms (98), an engagement portion (102) connected to said lever arms (98), and at least one spring (108), said lever arms (98) being rotatable relative to said base (22) and being biased by said spring (108) toward said base, said engagement portion (102) being disposed to apply a downward force against said leader (14) between said spindle (58) and said bar stop (52).

3. A supply magazine (20) as claimed in claim 1, further characterized by retraction means for moving the lever arms (98) away from the spindle (58) when the cover (24) is in the open position so to allow placement of the leader (14) over the spindle (58).

4. A supply magazine (20) as claimed in claim 3, further characterized in that said retraction means for biasing the lever arms (98) away from the spindle (58) comprises a retraction member (104) secured to the cover (24), said retraction member (104) having a catch member (107) which engages the bottom of the lever arms (98) such that when the cover (24) is moved to the open position said retraction means overcomes the force of said first biasing means thereby causing the lever arms (98) to move away from where the leader is to be positioned.

5. A supply magazine (20) as claimed in claim 1, further characterized in that the spindle is arranged such that said leader (14) is wrapped about said spindle (58) for at least one turn along substantially its axial width prior to applying any substantial force to the pouch (11).

6. A supply magazine (20) as claimed in claim 1, further characterized in that the spindle is arranged such that said leader (14) can be wrapped about said spindle (58) for approximately one turn along substantially its axial width prior to applying any substantial force to the pouch (11).

## Patentansprüche

1. Vorratsmagazin (20) zur Verwendung in einem Gerät zur Entnahme einzelner Blattfilme, die in einem Stapel (12) positioniert und in einer lichtdichten Umhüllung (11) mit einer an deren Vorderkante befestigten vorderen Lasche (14) angeordnet sind, mit
einem Bodenteil (22), das ein Aufnahmefach (51) zum Lagern des Blattfilmstapels (12) innerhalb der lichtdichten Umhüllung (11) umfaßt,
einem an einer Seite des Bodenteils mit Scharnieren (26) befestigten Deckel (24), der bezüglich des Bodenteils (22) zwischen einer geschlossenen und einer offenen Stellung hin- und herbewegbar ist,
einer Aufspulspindel (58), die drehbar im Bodenteil (22) befestigt ist, um die Umhüllung (11) aufzuwickeln, wobei die Spindel (58) Mittel umfaßt, die mit der Lasche (14) in Eingriff bringbar sind, um die Umhüllung (11) zumindest teilweise vom Blattfilmstapel abziehen,
einem Anschlagelement (52), das auf dem Bodenteil (22) angeordnet ist, um den Blattfilmstapel während des Abziehens der Umhüllung (11) in einem Aufnahmefach (51) zu lagern, **gekennzeichnet durch**
Mittel, die ein Durchhängen der Lasche bewirken und mindestens einen Hebelarm (98), ein mit diesem verbundenes Eingreifelement (102) und mindestens eine Feder (108) aufweisen, wobei der Hebelarm (98) bezüglich des Bodenteils (22) drehbar und von der Feder (108) zum Bodenteil hin vorspannbar ist und das Eingreifelement (102) derart angeordnet ist, daß es zwischen der Spindel (58) und dem Anschlagelement (52) eine nach unten gerichtete Kraft auf die Lasche (14) ausübt.

2. Vorratsmagazin (20) nach Anspruch 1, dadurch gekennzeichnet, daß die Mittel, die ein Durchhängen der Lasche bewirken, mindestens zwei voneinander beabstandete Hebelarme (98), ein mit diesen verbundenes Eingreifelement (102) und mindestens eine Feder (108) aufweisen, wobei die Hebelarme (98) bezüglich des Bodenteils (22) drehbar und von der Feder (108) zum Bodenteil hin vorspannbar sind und das Eingreifelement (102) derart angeordnet ist, daß es zwischen der Spindel (58) und dem Anschlagelement (52) eine nach unten gerichtete Kraft auf die Lasche (14) ausübt.

3. Vorratsmagazin (20) nach Anspruch 1, dadurch gekennzeichnet, daß Rückziehmittel vorgesehen sind, die die Hebelarme (98) von der Spindel (58) wegbewegen, wenn der Deckel (24) sich in seiner geöffneten Stellung befindet, so daß sich die Lasche (14) über die Spindel (58) legen kann.

4. Vorratsmagazin (20) nach Anspruch 3, dadurch gekennzeichnet, daß die Rückziehmittel, die die Hebelarme von der Spindel weghalten, ein am Deckel (24) befestigtes Rückziehelement (104) umfassen, das ein Arretiermittel (107) aufweist, welches mit der Unterseite der Hebelarme (98) derart in Eingriff gelangt, daß, wenn sich der Deckel (24) in seine geöffnete Stellung bewegt, die Rückziehmittel die Kraft der ersten Vorspanneinrichtung überwinden und dadurch bewirken, daß sich die Hebelarme (98) von dem Punkt wegbewegen, wo die Lasche positioniert werden soll.

5. Vorratsmagazin (20) nach Anspruch 1, dadurch gekennzeichnet, daß die Spindel derart angeordnet ist, daß die Lasche (14) sich mindestens einmal im wesentlichen entlang ihrer axialen Breite um die Spindel herumwickelt, um eine beträchtliche Kraft auf die Umhüllung (11) auszuüben.

6. Vorratsmagazin (20) nach Anspruch 1, dadurch gekennzeichnet, daß die Spindel derart angeordnet ist, daß die Lasche (14) mindesten einmal im wesentlichen entlang ihrer axialen Breite um die Spindel herumwickelbar ist, um eine beträchtliche Kraft auf die Umhüllung (11) auszuüben.

## Revendications

1. Magasin débiteur (20) destiné à être utilisé dans un appareil pour sortir du film (12) en feuilles individuelles, le film en feuilles étant disposé en pile et placé à l'intérieur d'un sachet étanche à la lumière (11), le sachet (11) comportant une amorce (14) fixée au bord d'attaque, ledit magasin débiteur (20) comportant
une base (22) comportant une partie de logement (51) destinée à contenir et retenir la pile de film en feuilles placée à l'intérieur du sachet étanche à la lumière (11),
un couvercle (24) fixé à ladite base par des charnières (26) le long d'un côté pour permettre de déplacer ledit couvercle (24) entre une position fermée et une position ouverte sur ladite base (22),
une broche réceptrice (58) fixée-avec possibilité de rotation à l'intérieur de ladite base (22) pour permettre d'enrouler le sachet (11) sur celle-ci, ladite broche (58) comportant des moyens pour saisir l'amorce (14) et tirer le sachet (11) au moins partiellement hors de la pile de film en feuilles,
une barre de butée (52) disposée dans ladite base (22) afin de retenir ladite pile de film en feuilles dans ladite partie de logement (51) pendant l'enlèvement dudit sachet (11) de ladite pile de film en feuilles, ledit magasin débiteur (20) étant caractérisé par :
des moyens destinés à donner du mou à ladite amorce, comprenant au moins un bras de levier (98), une partie de contact (102) reliée audit bras de levier (98), et au moins un ressort (108), ledit bras de levier (98) pouvant être tourné par rapport à ladite base (22) et étant poussé par ledit ressort (108) en direction de ladite base, ladite partie de contact (102) étant disposée de façon à appliquer une force orientée vers le bas sur ladite amorce (14) entre ladite broche (58) et ladite barre de butée (52).

2. Magasin débiteur (20) selon la revendication 1, caractérisé en outre en ce que lesdits moyens donnant du mou à ladite amorce comprennent une paire de bras de levier espacés (98), une partie de contact (102) reliée auxdits bras de levier (98), et au moins un ressort (108), lesdits bras de levier (98) pouvant être tournés par rapport à ladite base (22) et étant poussés par ledit ressort (108) en direction de ladite base, ladite partie de contact (102) étant disposée de façon à appliquer une force orientée vers le bas sur ladite amorce (14) entre ladite broche (58) et ladite barre de butée (52).

3. Magasin débiteur (20) selon la revendication 1, caractérisé en outre par un moyen de rappel destiné à écarter les bras de levier (98) de la broche (58) lorsque le couvercle (24) est en position ouverte de manière à permettre la mise en place de l'amorce (14) sur la broche (58).

4. Magasin débiteur (20) selon la revendication 3, caractérisé en outre en ce que ledit moyen de rappel destiné à pousser les bras de levier (98) à l'écart de la broche (58) comprend un élément de rappel (104) fixé au couvercle (24), ledit élément de rappel (104) comportant un élément de talon (107) qui vient en contact avec le dessous des bras de levier (98) de sorte que lorsque le couvercle (24) est amené à la position ouverte, ledit moyen de rappel surmonte la force dudit premier moyen de poussée en amenant ainsi les bras de levier (98) à s'écarter de l'emplacement auquel doit être positionnée l'amorce.

5. Magasin débiteur (20) selon la revendication 1, caractérisé en outre en ce que la broche est disposée de telle manière que ladite amorce (14) s'enroule autour de ladite broche (58) d'au moins un tour suivant sensiblement sa largeur axiale avant d'appliquer la moindre force importante sur le sachet (11).

6. Magasin débiteur (20) selon la revendication 1, caractérisé en outre en ce que la broche est disposée de telle manière que ladite amorce (14) peut être enroulée autour de ladite broche (58) d'approximativement un tour suivant sensiblement sa largeur axiale avant d'appliquer la moindre force importante sur le sachet (11).
